# EUROPÄISCHE PATENTSCHRIFT

(11) **EP 0 710 201 B1**
(45) Veröffentlichungstag und Bekanntmachung des Hinweises auf die Patenterteilung: **29.07.1998**
(21) Anmeldenummer: 95921768.8
(22) Anmeldetag: 29.05.1995
(51) Int. Cl.: B62D 53/08

(54) **SATTELKUPPLUNG, VERFAHREN ZUM HERSTELLEN EINER SATTELKUPPLUNG SOWIE VERWENDUNG EINER PLATTE**
TRACTION COUPLING, METHOD OF MANUFACTURING A TRACTION COUPLING, USE OF A PLATE
SELLETTE D'ATTELAGE, PROCEDE DE FABRICATION D'UNE SELLETTE D'ATTELAGE ET UTILISATION D'UNE PLAQUE

(30) Priorität: 27.05.1994 DE 4418533
(43) Veröffentlichungstag der Anmeldung: 08.05.1996
(73) Patentinhaber: Hunger, Walter, D-97074 Würzburg (DE)
(72) Erfinder: Hunger, Walter, D-97074 Würzburg (DE)
(74) Vertreter: Witte, Alexander, Dr.-Ing.
(86) Internationale Anmeldenummer: EP9502029
(87) Internationale Veröffentlichungsnummer: WO9532884

(56) Entgegenhaltungen:
- EP-A- 0 058 732
- US-A- 5 165 714

## Beschreibung

Die Erfindung betrifft eine Sattelkupplung mit einem Sattel, in dessen Oberfläche ein Antifriktionsbelag eingelassen ist, wobei der Antifriktionsbelag Polytetrafluorethylen (PTFE) enthält.

Die Erfindung betrifft ferner ein Verfahren zum Herstellen einer Sattelkupplung mit einem Sattel, in dessen Oberfläche ein Antifriktionsbelag eingelassen ist, wobei der Antifriktionsbelag Polytetrafluorethylen (PTFE) enthält.

Die Erfindung betrifft schließlich eine Verwendung einer PTFE und Polyesterharz enthaltenden Platte.

Eine Sattelkupplung und ein Verfahren der eingangs genannten Art sind aus der DE-OS 35 30 467 bekannt.

Sattelkupplungen dienen zum verbinden eines Sattelauflieger-Anhängers mit einer Sattelzugmaschine. Die Sattelzugmaschine ist dabei mit dem sogenannten Sattel verbunden, der im wesentlichen hufeisenförmig ausgebildet ist. Die Oberseite des Sattels bildet eine Auflagefläche für eine Gegenplatte, die an der Unterseite des vorderen Endes des Sattelauflieger-Anhängers angeordnet ist. Mittels eines dort vorgesehenen Königszapfens, der in die Aufnahme des Sattels eingeführt und dort verriegelt wird, wird eine formschlüssige, jedoch drehbare Verbindung zwischen Zugmaschine und Anhänger erreicht.

Bei den meisten verwendeten Sattelkupplungen werden die im wesentlichen horizontalen Auflageflächen an der Oberseite des Sattels bzw. der Unterseite des Aufliegers ebenso wie die Halterung des Königszapfens mittels Schmierfett geschmiert. Es sind dabei erhebliche Mengen an Schmierfett erforderlich, um die Funktionsfähigkeit derartiger herkömmlicher Sattelkupplungen sicherzustellen.

Es sind daher Versuche unternommen worden, aus Gründen des Umweltschutzes und aus Gründen der Wirtschaftlichkeit den Verbrauch von Schmierfetten einzuschränken, indem wartungsarme oder sogar wartungsfreie Sattelkupplungen vorgeschlagen worden sind. Bei Sattelkupplungen dieser Art werden Beläge verwendet, die selbst aus einem Material mit niedrigem Reibungskoeffizienten bestehen. In der Praxis haben sich derartige Sattelkupplungen aber noch nicht durchsetzen können, weil die vorgeschlagenen Antifriktionsbeläge den extremen Belastungen nicht gewachsen waren, die bei Schwerlastfahrzeugen im Bereich der Sattelkupplung auftreten, insbesondere im Langzeitgebrauch.

Aus der eingangs genannten DE-OS 35 30 467 ist eine Sattelkupplung bekannt, bei der in die Oberfläche des Sattels ein Antifriktionsbelag eingelassen ist, der bündig mit der Oberfläche des Sattels abschließt. Der Antifriktionsbelag besteht aus einem Polytetrafluorethylen (PTFE), insbesondere einem mit PTFE beschichteten Netzgewebe. Der Antifriktionsbelag bei dieser bekannten Sattelkupplung ist aufgeklebt. Hierzu ist die Oberfläche des Sattels mit einer passenden Ausfräsung versehen, in die der Antifriktionsbelag eingeklebt ist.

Es hat sich jedoch gezeigt, daß Antifriktionsbeläge aus reinem PTFE im Dauerbetrieb bei Schwerlast-Sattelfahrzeugen nicht immer hinreichend beständig sind.

Aus der US-PS 3 174 812 ist eine Sattelkupplung bekannt, bei der in die Oberfläche des Sattels drei Antifriktionssegmente eingelassen sind. Die Antifriktionssegmente stehen geringfügig über die Oberfläche des Sattels vor. Sie sind mittels Befestigungselementen lösbar in entsprechenden Ausnehmungen an der Satteloberfläche befestigt. Als Materialien werden einerseits metallische Werkstoffe vorgeschlagen, nämlich Gußeisen, Sintermetalle oder Mischungen aus Bronze, Blei, Graphit und Molybdän-Disulfid, andererseits wird aber auch vorgeschlagen, Kunststoffe zu verwenden, nämlich synthetische Harze, insbesondere Polyamid-Harze oder Azetat-Harze, wie sie unter den Handelsnamen Nylon, Delrin und Hostaform erhältlich sind.

Aus der US-PS 3 704 924 ist eine weitere Sattelkupplung bekannt, bei der an der Oberfläche des Sattels ein großflächiger, ebenfalls im wesentlichen hufeisenförmiger Antifriktionsbelag angebracht ist. Die Auflagefläche des Antifriktionsbelages steht auch bei dieser bekannten Sattelkupplung über die Oberfläche des Sattels vor. Hierzu wird der Antifriktionsbelag entweder mit seitlichen, kragenartigen Halteelementen gehalten oder ist insgesamt in einer ausgefräste Vertiefung in der Oberfläche des Sattels eingelassen. Als Materialien für den Antifriktionsbelag werden dabei Vinyl, Polyethylen und Polypropylen vorgeschlagen.

Auch diese bekannten Sattelkupplungen haben sich in der Praxis nicht durchsetzen können, offensichtlich wegen mangelnder mechanischer Beständigkeit der für den Antifriktionsbelag verwendeten Materialien.

Der Erfindung liegt demgegenüber die Aufgabe zugrunde, eine Sattelkupplung und ein Verfahren der eingangs genannten Art dahingehend weiterzubilden, daß eine vollkommen wartungsfreie Sattelkupplung entsteht, die auch im Langzeitgebrauch den enormen mechanischen Belastungen standhält, wie sie bei Schwerlast-Sattelaufliegerfahrzeugen auftreten. Die Sattelkupplung soll dabei einfach und kostengünstig herstellbar sein.

Bei einer Sattelkupplung der eingangs genannten Art wird diese Aufgabe erfindungsgemäß dadurch gelöst, daß der Antifriktionsbelag ein Gemisch aus PTFE und Polyesterharz enthält.

Bei einem Verfahren der eingangs genannten Art wird diese Aufgabe erfindungsgemäß durch die Schritte:
a) Vermischen von feinkörnigem PTFE mit Polyesterharz;
b) Gießen der Mischung in eine der Form des Antifriktionsbelags entsprechenden Gießform;
c) Aushärten der Mischung;
d) Entnehmen des ausgehärteten Antifriktionsbelages aus der Gießform; und
e) Befestigen des Antifriktionsbelages auf dem Sattel gelöst.

Schließlich umfaßt die Erfindung noch die Verwendung einer PTFE und Polyesterharz enthaltenden Platte als Antifriktionsbelag für einen Sattel einer Sattelkupplung.

Bei einer bevorzugten Ausgestaltung der erfindungsgemäßen Sattelkupplung ist das PTFE ein Recycling-PTFE. In entsprechender Weise wird bei dem erfindungsgemäßen Verfahren das feinkörnige PTFE durch Vermahlen von PTFE-Abfällen hergestellt.

Diese Maßnahmen haben mehrere Vorteile unter zwei unterschiedlichen Aspekten. Zum einen ergibt sich ein erheblicher Kostenvorteil, weil PTFE ein relativ teurer Werkstoff ist, während Abfall-PTFE bzw. Reycling-PTFE zu sehr viel geringeren Kosten zur Verfügung steht. Zum anderen ergibt diese sinnvolle Wiederverwendung von PTFE-Abfällen eine Entlastung bei der Entsorgung dieser Abfälle. PTFE ist nämlich ein problematischer Abfall, weil PTFE bekanntlich ein Werkstoff ist, der unter normalen Temperaturbedingungen praktisch allen üblichen Umweltbelastungen standhält und daher auf Deponien nicht verrottet. Damit ergibt sich beispielsweise für den Hersteller von PTFE-Bauteilen, die häufig als Sonderbauteile, beispielsweise Dichtungen großen Durchmessers, aus dem vollen Material herausgearbeitet werden müssen, der Vorteil, daß einerseits das Entsorgungsproblem entfällt und andererseits eine sinnvolle Wiederverwendung der Abfälle möglich ist.

Bei bevorzugten Weiterbildungen der erfindungsgemäßen Sattelkupplung bzw. des erfindungsgemäßen Verfahrens enthält der Antifriktionsbelag bzw. die verwendete Mischung 40 bis 60 Gew.-% PTFE und/oder 40 bis 60 Gew.-% Polyesterharz.

Diese Rezeptur hat sich in der Praxis als besonders günstig erwiesen und führt zu Antifriktionsbelägen hoher Stabilität, insbesondere im Langzeitbetrieb.

Bei bevorzugten Weiterbildungen der erfindungsgemäßen Sattelkupplung steht der Antifriktionsbelag in an sich bekannter Weise mit einer planen Auflage-Oberfläche über die Oberfläche des Sattels über.

Ferner ist dabei in ebenfalls an sich bekannter Weise bevorzugt, wenn der Antifriktionsbelag mindestens teilweise an seinem Umfang von einem aus der Oberfläche des Sattels vorstehenden Rand umfaßt ist. Der Rand ist dabei vorzugsweise einstückig mit dem Sattel.

Bei Weiterbildungen des erfindungsgemäßen Verfahrens wird die in die Gießform gegossene Mischung gepreßt und/oder unter Druck ausgehärtet. Besonders bevorzugt ist es, diese Maßnahmen unter Wärmeeinwirkung durchzuführen, insbesondere im Temperaturbereich zwischen 40 und 50°C.

Zum Aufbringen des Antifriktionsbelages auf den Sattel wird bevorzugt die Befestigungsseite des ausgehärteten Antifriktionsbelages zuvor aufgerauht.

In entsprechender Weise kann vorzugsweise der Sattel an der zum Befestigen des Antifriktionsbelages vorgesehenen Oberfläche vorbehandelt werden, insbesondere durch Reinigen, Aufrauhen oder dgl..

Bei weiteren Ausführungsformen des erfindungsgemäßen Verfahrens ist ferner bevorzugt, wenn in an sich bekannter Weise der Sattel vorab mit einer vertieften Aufnahme für den Antifriktionsbelag versehen wird.

Diese Maßnahme hat den Vorteil, daß bei einer formschlüssigen Aufnahme des Antifriktionsbelages dessen Halterung am Sattel verbessert wird.

Besonders bevorzugt ist bei dem erfindungsgemäßen Verfahren, wenn der Antifriktionsbelag mittels eines Zweikomponenten-Epoxidharzklebers aufgeklebt wird. Vorzugsweise geschieht dieser unter Druck und zwar für eine so lange Zeit, daß der Kleber hinreichend aushärten kann.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine perspektivische Ansicht eines Ausführungsbeispiels einer erfindungsgemäßen Sattelkupplung;
- Fig. 2: eine Schnittdarstellung, in stark vergrößertem Maßstab und zwar in einer Ansicht gemäß der Linie II-II von Fig. 1.

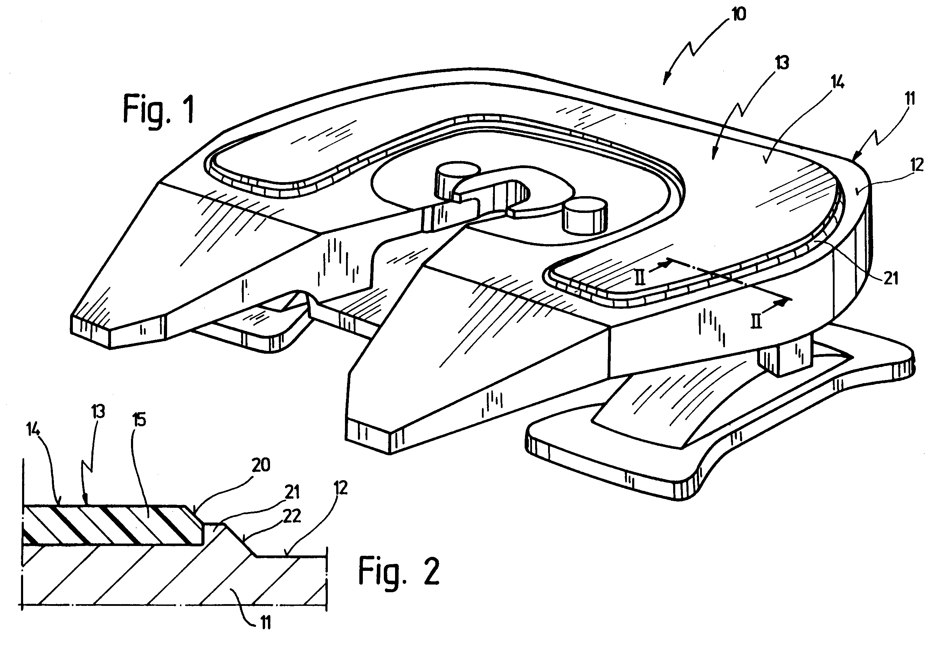

In Fig. 1 bezeichnet 10 insgesamt eine Sattelkupplung, von der der Übersichtlichkeit halber nur ein Sattel 11 dargestellt ist. Der Sattel 11 weist eine obere Oberfläche 12 auf, die im wesentlichen horizontal an einem Zugfahrzeug angeordnet ist, das mit der Sattelkupplung 10 ausgestattet wurde.

In die Oberfläche 12 ist ein Antifriktionsbelag 13 eingelassen. Dessen ebenfalls im wesentlichen horizontale Oberfläche 14 steht geringfügig über die Oberfläche 12 des Sattels 11 über.

Der Antifriktionsbelag 13 besteht aus einem PTFE-Compound, wie weiter unten noch erläutert werden wird.

Aus der Detaildarstellung in Fig. 2 erkennt man, daß der Antifriktionsbelag 13 an seinem umlaufenden Rand mit einer Anlaufschräge 20 versehen ist.

Ferner ist der Antifriktionsbelag 13 in der Oberfläche 12 des Sattels 11 mittels eines umlaufenden Randes 21 formschlüssig gehalten. Der umlaufende Rand 21 ist vorzugsweise einstückig mit dem Sattel 11 hergestellt. So kann der Sattel 11 als Gußteil hergestellt sein, wobei der umlaufende Rand 21 zugleich mit dem Sattel 11 gegossen wird. Der Rand 21 ist vorzugsweise ebenfalls mit einer Schräge 22 versehen.

Der Antifriktionsbelag 13 enthält, wie bereits erwähnt, ein PTFE-Compound 15, vorzugsweise besteht er insgesamt aus einem solchen Compound.

Das Compound setzt sich dabei vorzugsweise aus 40 bis 60 Gew.-% Recycling-PTFE-Compound und 40 bis 60 Gew.-% Polyesterharz zusammen.

Zur Herstellung des Antifriktionsbelages 13 werden zunächst PTFE-Abfälle feinkörnig vermahlen und das so erzeugte feinkörnige Compound wird mit Polyesterharz vermischt.

Die so erzeugte fließfähige Mischung wird in eine der äußeren Form des Antifriktionsbelages 13 entsprechende Gießform gegossen. Die Mischung wird dabei vorzugsweise gepreßt. Die Mischung wird dann unter Druck in einem Ofen ausgehärtet und zwar vorzugsweise unter Wärmeeinwirkung, nämlich insbesondere in einem Temperaturbereich zwischen 40 und 50°C.

Nach dem Aushärten der Mischung steht eine massive Platte zur Verfügung, die nun an der Oberfläche 13 des Sattels 11 befestigt werden muß.

Hierzu wird vorzugsweise die Befestigungsseite des nunmehr plattenförmigen Antifriktionsbelages 13 aufgerauht und gereinigt.

In entsprechender Weise wird die zur Aufnahme des Antifriktionsbelages 13 vorgesehene Oberfläche des Sattels 11 ebenfalls vorbehandelt und gereinigt. Die Aufnahme in der Oberfläche 12 des Sattels 11 kann zum Beispiel mittels einer CNC-gesteuerten Fräsmaschine ausgefräst werden.

Der Antifriktionsbelag 13 wird nun in die Aufnahme eingeklebt. Hierzu wird vorzugsweise ein Zweikomponenten-Epoxidharzkleber verwendet. Die beiden zu verklebenden Teile werden nun unter Druck gefügt und in Kontakt miteinander gehalten, bis der Zweikomponentenkleber ausgehärtet ist.

Die erfindungsgemäße Sattelkupplung hat sich in praktischen Fahrversuchen mit Schwerlast-Sattelaufliegern bewährt, bei denen die erfindungsgemäße Sattelkupplung über viele zehntausend Kilometer im Einsatz war, ohne daß sich Verschleißerscheinungen gezeigt haben. Im Bereich der Auflageflächen zwischen Sattel und Gegenplatte ist bei der erfindungsgemäßen Sattelkupplung keinerlei weitere Schmierung erforderlich. Die erfindungsgemäße Sattelkupplung ist insoweit wartungsfrei. Damit wird die Umwelt gleich in zweifacher Weise geschont, weil zum einen kein Schmierfett in die Umwelt gelangt und andererseits problematische PTFE-Abfälle bei der Herstellung der Sattelkupplung wiederverwendet werden.

## Patentansprüche

1. Sattelkupplung mit einem Sattel (11), in dessen Oberfläche (12) ein Antifriktionsbelag (13) eingelassen ist, wobei der Antifriktionsbelag (13) Polytetrafluorethylen (PTFE) enthält, dadurch gekennzeichnet, daß der Antifriktionsbelag (13) ein Gemisch aus PTFE und Polyesterharz enthält.

2. Sattelkupplung nach Anspruch 1, dadurch gekennzeichnet, daß das PTFE ein Recycling-PTFE ist.

3. Sattelkupplung nach Anspruch 1 oder 2, dadurch gekennzeichnet, daß der Antifriktionsbelag (13) 40 bis 60 Gew.-% PTFE enthält.

4. Sattelkupplung nach einem oder mehreren der Ansprüche 1 bis 3, dadurch gekennzeichnet, daß der Antifriktionsbelag (13) 40 bis 60 Gew.-% Polyesterharz enthält.

5. Sattelkupplung nach einem oder mehreren der Ansprüche 1 bis 4, dadurch gekennzeichnet, daß der Antifriktionsbelag (13) mit einer planen Auflage-Oberfläche (14) über die Oberfläche (12) des Sattels (11) übersteht.

6. Sattelkupplung nach Anspruch 5, dadurch gekennzeichnet, daß der Antifriktionsbelag (13) mindestens teilweise an seinem Umfang von einem aus der Oberfläche (12) des Sattels (11) vorstehenden Rand (21) umfaßt ist.

7. Sattelkupplung nach Anspruch 6, dadurch gekennzeichnet, daß der Rand (21) einstückig mit dem Sattel (11) ist.

8. Verfahren zum Herstellen einer Sattelkupplung (10) mit einem Sattel (11), in dessen Oberfläche (12) ein Antifriktionsbelag (13) eingelassen ist, wobei der Antifriktionsbelag (13) Polytetrafluorethylen (PTFE) enthält, gekennzeichnet durch die Schritte:
a) Vermischen von feinkörnigem PTFE mit Polyesterharz;
b) Gießen der Mischung in eine der Form des Antifriktionsbelages (13) entsprechenden Gießform;
c) Aushärten der Mischung;
d) Entnehmen des ausgehärteten Antifriktionsbelages (13) aus der Gießform; und
e) Befestigen des Antifriktionsbelages (13) auf dem Sattel (11).

9. Verfahren nach Anspruch 8, dadurch gekennzeichnet, daß das feinkörnige PTFE durch Vermahlen von PTFE-Abfällen hergestellt wird.

10. Verfahren nach Anspruch 8 oder 9, dadurch gekennzeichnet, daß die Mischung mit 40 bis 60 Gew.-% PTFE hergestellt wird.

11. Verfahren nach einem oder mehreren der Ansprüche 8 bis 10, dadurch gekennzeichnet, daß die Mischung mit 40 bis 60 Gew.-% Polyesterharz hergestellt wird.

12. Verfahren nach einem oder mehreren der Ansprüche 8 bis 11, dadurch gekennzeichnet, daß die in die Gießform gegossene Mischung gepreßt wird.

13. Verfahren nach einem oder mehreren der Ansprüche 8 bis 12, dadurch gekennzeichnet, daß die in die Gießform gegossene Mischung unter Druck ausgehärtet wird.

14. Verfahren nach einem oder mehreren der Ansprüche 8 bis 13, dadurch gekennzeichnet, daß die in die Gießform eingegossene Mischung unter Wärmeeinwirkung ausgehärtet wird.

15. Verfahren nach Anspruch 14, dadurch gekennzeichnet, daß die in die Gießform gegossene Mischung bei 40 bis 50°C ausgehärtet wird.

16. Verfahren nach einem oder mehreren der Ansprüche 8 bis 15, dadurch gekennzeichnet, daß der ausgehärtete Antifriktionsbelag (13) vor dem Befestigen auf dem Sattel (11) auf seiner Befestigungsseite aufgerauht wird.

17. Verfahren nach einem oder mehreren der Ansprüche 8 bis 16, dadurch gekennzeichnet, daß der Sattel (11) an der zum Befestigen des Antifriktionsbelages (13) vorgesehenen Oberfläche vorbehandelt wird.

18. Verfahren nach einem oder mehreren der Ansprüche 8 bis 17, dadurch gekennzeichnet, daß der Sattel (11) mit einer vertieften Aufnahme für den Antifriktionsbelag (13) versehen wird.

19. Verfahren nach einem oder mehreren der Ansprüche 8 bis 18, dadurch gekennzeichnet, daß der Antifriktionsbelag (13) mittels Kleben auf dem Sattel (11) befestigt wird.

20. Verfahren nach Anspruch 19, dadurch gekennzeichnet, daß der Antifriktionsbelag (13) mittels eines Zweikomponenten-Epoxidharzklebers aufgeklebt wird.

21. Verfahren nach Anspruch 19 oder 20, dadurch gekennzeichnet, daß der Antifriktionsbelag (13) unter Druck aufgeklebt wird.

22. Verwendung einer PTFE oder Polyesterharz enthaltenden Platte als Antifriktionsbelag (13) für einen Sattel (11) einer Sattelkupplung (10).

23. Verwendung nach Anspruch 22, dadurch gekennzeichnet, daß die Platte Recycling-PTFE enthält.

## Claims

1. A fifth wheel assembly having a fifth wheel bearing plate (11) and an anti-friction liner (13) embedded into a surface (12) thereof, the anti-friction liner (13) comprising polytetrafluorethylene (PTFE), characterized in that the anti-friction liner (13) comprises a mixture of PTFE and polyester resin.

2. The fifth wheel assembly of claim 1, characterized in that the PTFE is recycled PTFE.

3. The fifth wheel assembly of claims 1 or 2, characterized in that the anti-friction liner (13) comprises between 40 and 60% by weight of PTFE.

4. The fifth wheel assembly of one of claims 1 to 3, characterized in that the anti-friction liner (13) comprises between 40 and 60% by weight of polyester resin.

5. The fifth wheel assembly of any of claims 1 to 4, characterized in that the anti-friction liner (13) has a planar support surface (14) extending beyond the surface (12) of the bearing plate (11).

6. The fifth wheel assembly of claim 5, characterized in that the anti-friction liner (13) is at least partially surrounded at its periphery by a collar (21) protruding from the surface (12) of the bearing plate (11).

7. The fifth wheel assembly of claim 6, characterized in that the collar (21) is integral with the bearing plate (11).

8. A method of manufacturing a fifth wheel assembly having a fifth wheel bearing plate (11) and an anti-friction liner (13) embedded into a surface (12) thereof, the anti-friction liner (13) comprising polytetrafluorethylene (PTFE), characterized by the steps of:
a) mixing fine-grained PTFE with polyester resin;
b) pouring the mixture into a mold having a shape corresponding to the anti-friction liner (13);
c) hardening the mixture;
d) picking the hardened anti-friction liner (13) from the mold; and
e) mounting the anti-friction liner (13) on the bearing plate (11).

9. The method of claim 8, characterized in that the fine-grained PTFE is produced by milling PTFE waste.

10. The method of claims 8 or 9, characterized in that the mixture is produced with between 40 and 60% by weight of PTFE.

11. The method of any of claims 8 to 10, characterized in that the mixture is produced with between 40 and 60% by weight of polyester resin.

12. The method of any of claims 8 to 11, characterized in that the mixture, as poured into the mold, is pressed.

13. The method of any of claims 8 to 12, characterized in that the mixture, as poured into the mold, is hardened under pressure.

14. The method of any of claims 8 to 13, characterized in that the mixture, as poured into the mold, is hardened under the action of heat.

15. The method of claims 14, characterized in that the mixture, as poured into the mold, is hardened at between 40 and 50°C.

16. The method of any of claims 8 to 15, characterized in that the hardened anti-friction liner (13) is roughened on its mounting side prior to mounting same on the bearing plate (11).

17. The method of any of claims 8 to 16, characterized in that the mounting plate (11) is pre-treated at its surface where the anti-friction liner (13) shall be mounted.

18. The method of any of claims 8 to 17, characterized in that the bearing plate (11) is provided with a recessed seat for the anti-friction liner (13).

19. The method of any of claims 8 to 18, characterized in that the anti-friction liner (13) is mounted to the bearing plate (11) by glueing.

20. The method of claim 19, characterized in that the anti-friction liner (13) is glued by means of a two-component epoxy resin adhesive.

21. The method of claim 19 or 20, characterized in that the anti-friction liner (13) is glued under pressure.

22. Usage of a plate comprising PTFE or polyester resin as an anti-friction liner (13) for a bearing plate (11) of a fifth wheel assembly.

23. The usage of claim 22, characterized in that the plate comprises recycled PTFE.

## Revendications

1. Sellette d'attelage comportant une sellette (11), dans la surface (12) de laquelle est encastrée une garniture antifriction (13), la garniture antifriction (13) contenant du polytétrafluoréthylène (PTFE), caractérisée en ce que la garniture antifriction (13) contient un mélange de PTFE et de résine polyester.

2. Sellette d'attelage selon la revendication 1, caractérisée en ce que le PTFE est un PTFE recyclé.

3. Sellette d'attelage selon la revendication 1 ou 2, caractérisée en ce que la garniture antifriction (13) contient de 40 à 60 % en poids de PTFE.

4. Sellette d'attelage selon l'une ou plusieurs des revendications 1 à 3, caractérisée en ce que la garniture antifriction (13) contient de 40 à 60 % en poids de résine polyester.

5. Sellette d'attelage selon l'une ou plusieurs des revendications 1 à 4, caractérisée en ce que la garniture antifriction (13) dépasse de la surface (12) de la sellette (11) par une surface d'appui (14) plane.

6. Sellette d'attelage selon la revendication 5, caractérisée en ce que la garniture antifriction (13) est entourée, au moins partiellement, au niveau de sa circonférence, par un bord (21) dépassant de la surface (12) de la sellette (11).

7. Sellette d'attelage selon la revendication 6, caractérisée en ce que le bord (21) ne forme qu'une seule pièce avec la sellette (11).

8. Procédé de fabrication d'une sellette d'attelage (10) comportant une sellette (11), dans la surface (12) de laquelle est encastrée une garniture antifriction (13), la garniture antifriction (13) contenant du polytétrafluoréthylène (PTFE), caractérisé en ce qu'il consiste à :
a) mélanger du PTFE à grain fin avec de la résine polyester ;
b) verser le mélange dans un moule correspondant à la forme de la garniture antifriction (13) ;
c) faire durcir le mélange ;
d) retirer la garniture antifriction (13) durcie du moule ; et
e) fixer la garniture antifriction (13) sur la sellette (11).

9. Procédé selon la revendication 8, caractérisé en ce que le PTFE à grain fin est fabriqué par broyage de déchets de PTFE.

10. Procédé selon la revendication 8 ou 9, caractérisé en ce que le mélange est fabriqué avec 40 à 60 % en poids de PTFE.

11. Procédé selon l'une ou plusieurs des revendications 8 à 10, caractérisé en ce que le mélange est fabriqué avec 40 à 60 % en poids de résine polyester.

12. Procédé selon l'une ou plusieurs des revendications 8 à 11, caractérisé en ce que le mélange versé dans le moule est pressé.

13. Procédé selon l'une ou plusieurs des revendications 8 à 12, caractérisé en ce que le mélange versé dans le moule est durci sous pression.

14. Procédé selon l'une ou plusieurs des revendications 8 à 13, caractérisé en ce que le mélange versé dans le moule est durci par action de la chaleur.

15. Procédé selon la revendication 14, caractérisé en ce que le mélange versé dans le moule est durci à une température de 40 à 50°C.

16. Procédé selon l'une ou plusieurs des revendications 8 à 15, caractérisé en ce que la garniture antifriction (13) durcie, avant d'être fixée sur la sellette (11), est rendue rugueuse sur une face de fixation.

17. Procédé selon l'une ou plusieurs des revendications 8 à 16, caractérisé en ce que la sellette (11) subit un traitement préparatoire sur la surface prévue pour la fixation de la garniture antifriction (13).

18. Procédé selon l'une ou plusieurs des revendications 8 à 17, caractérisé en ce que la sellette (11) présente un logement évidé destiné à la garniture antifriction (13).

19. Procédé selon l'une ou plusieurs des revendications 8 à 18, caractérisé en ce que la garniture antifriction (13) est fixée par collage sur la sellette (11).

20. Procédé selon la revendication 19, caractérisé en ce que la garniture antifriction (13) est collée au moyen d'une colle époxyde à deux composants.

21. Procédé selon la revendication 19 ou 20, caractérisé en ce que la garniture antifriction (13) est collée sous pression.

22. Utilisation d'une plaque contenant du PTFE ou de la résine polyester comme garniture antifriction (13) pour la sellette (11) d'une sellette d'attelage (10).

23. Utilisation selon la revendication 22, caractérisée en ce que la plaque contient du PTFE recyclé.
